# EUROPEAN PATENT APPLICATION

(11) **EP 4 549 040 A1**
(43) Date of publication of application: **07.05.2025**
(21) Application number: 23854762.4
(22) Date of filing: 19.07.2023
(51) Int. Cl.: B21B 31/02, B21B 33/00, F16F 7/00, F16F 15/02, F16F 15/04

(54) **ROLLING MILL**

(30) Priority: 17.08.2022 JP 2022129883
(71) Applicant: JFE Steel Corporation, Tokyo 100-0011 (JP)
(72) Inventor: YOSHIMOTO, Takero, Tokyo 100-0011 (JP)
(74) Representative: Grünecker Patent- und Rechtsanwälte PartG mbB
(86) International application number: PCT/JP2023/026359
(87) International publication number: WO 2024/038725

(57) **Abstract**

A rolling mill of the present invention is a rolling mill including: a pair of upper and lower rolls disposed in a housing; and a roll chock that holds each of the upper and lower rolls. A liner having a vibration reducing function is provided on at least one of a housing counter surface of the roll chock and a housing surface corresponding to the housing counter surface.

## Description

### Field

The present invention relates to a rolling mill.

### Background

In a rolling mill such as a tandem cold rolling line, when rolling of a metal band is performed, if rolling speed is high to some extent, chattering occurs in the rolling mill and a sheet thickness defect or a pattern in a sheet width direction called chatter mark occurs in a material to be rolled, which sometimes adversely affects quality. As a general measure against chattering, a method providing, in a rolling mill, a sensor that detects vibration and monitoring vibration and performing rolling with speed reduced to a speed range in which vibration does not occur is adopted. However, since this method deteriorates production efficiency, many proposals for reducing vibration that causes chattering of a rolling mill have been made.

In a rolling mill described in Patent Literature 1, a contact end face that comes into contact with a delivery-side member of a housing that supports a backup roll is provided in a bearing body of the backup roll. Patent Literature 1 discloses a technique of reducing vibration by providing, on opposed sides of the bearing main body, via a damping mechanism that damps vibration in the up-down direction, a wedge-shaped member having an inclined sliding surface further separated from a material to be rolled from an entry side toward a delivery side and a contact end face that comes into contact with a delivery side member.

Patent Literature 2 discloses a technique of reducing vibration by including a beam having elasticity attached between two roll chocks or between two pressure stands of a backup roll of a rolling mill, an added mass mounted on the beam, and a damper that brakes the added mass.

### Citation List

### Patent Literature

Patent Literature 1: JP H08-10807 A
Patent Literature 2: JP H09-267110 A

### Summary

### Technical Problem

However, in the techniques disclosed in Patent Literatures 1 and 2, large-scale facility remodeling is essential for introduction into an existing rolling mill. This is difficult from the viewpoint of time and cost. In the techniques disclosed in Patent Literatures 1 and 2, there is a problem in that a production loss because of stopping a production line occurs because the technique involves machining and remodeling for the housing or the roll chock.

The present invention has been made in view of the above problems, and an object of the present invention is to provide a rolling mill capable of, while suppressing a production loss, inexpensively reducing vibration that causes chattering.

### Solution to Problem

To solve the problem and achieve the object, (1) a rolling mill according to the present invention includes: a pair of upper and lower rolls disposed in a housing; and a roll chock that holds each of the upper and lower rolls, wherein a liner having a vibration reducing function is provided on at least one of a housing counter surface of the roll chock and a housing surface corresponding to the housing counter surface.

(2) Moreover, in the rolling mill according to above (1), the liner may be configured using a damping material.

(3) Moreover, in the rolling mill according to above (2), the damping material may be a viscoelastic body, and the liner may be configured by a liner main body section made of a metal material and the viscoelastic body that covers the liner main body section.

(4) Moreover, in the rolling mill according to any one of above (1) to (3), the upper and lower rolls may be at least one of a pair of work rolls vertically disposed with a material to be rolled interposed therebetween, a pair of intermediate rolls respectively in contact with the pair of work rolls, and a pair of backup rolls respectively in contact with the pair of intermediate rolls. Advantageous Effects of Invention

The rolling mill according to the present invention has an effect of capable of, while suppressing a production loss, inexpensively reducing vibration that causes chattering.

### Brief Description of Drawings

FIG. 1 is a schematic diagram of a rolling mill according to an embodiment.
FIG. 2(a) is a schematic diagram of a work roll chock liner viewed from the front side. FIG. 2(b) is a schematic diagram of the work roll chock liner as viewed from the rear side.
FIG. 3 is a diagram illustrating an A-A cross section in FIG. 2(a) of the work roll chock liner.
FIG. 4 is a diagram illustrating a state in which a work roll chock liner is fixed to a work roll chock by bolts.
FIG. 5 is a schematic diagram of another example of the rolling mill according to the embodiment.
FIG. 6(a) is a graph illustrating a result of an FFT analysis of vibration at the time when rolling is performed by the rolling mill according to the embodiment. FIG. 6(b) is a graph illustrating a result of an FFT analysis of vibration at the time when rolling is performed by a rolling mill according to a comparative example. Description of Embodiment

An embodiment of a rolling mill according to the present invention is explained below. Note that the present invention is not limited by the present embodiment.

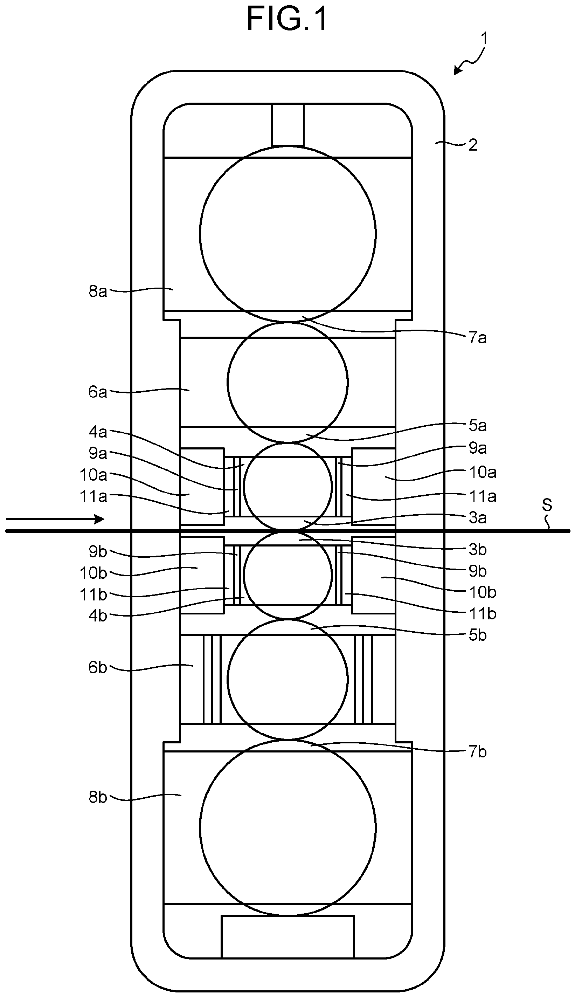

FIG. 1 is a schematic diagram of a rolling mill 1 according to the embodiment. As illustrated in FIG. 1, the rolling mill 1 according to the embodiment includes a housing 2 and a pair of work rolls 3a and 3b, a pair of intermediate rolls 5a and 5b, backup rolls 7a and 7b, and the like provided on an upper side and a lower side. The pair of intermediate rolls 5a and 5b is respectively in contact with the work rolls 3a and 3b. The backup rolls 7a and 7b are respectively in contact with the intermediate rolls 5a and 5b. The rolling mill 1 according to the embodiment is a six-stage rolling mill that carries out rolling on a steel sheet S that is a material to be rolled. A steel type of the steel sheet S is, for example, a steel sheet for an automobile outer plate. Note that the present invention is not limited to the six-stage rolling mill and can also be applied to a four-stage rolling mill having four stages without an intermediate roll or a multi-stage rolling mill having more than six stages.

As illustrated in FIG. 1, in the housing 2, a work roll chock 4a, a work roll chock 4b, an intermediate roll chock 6a, an intermediate roll chock 6b, a backup roll chock 8a, and a backup roll chock 8b are provided. The work roll chock 4a rotatably supports one end in the axial direction of the work roll 3a on the upper side. The work roll chock 4b rotatably supports one end in the axial direction of the work roll 3b on the lower side. The intermediate roll chock 6a rotatably supports one end in the axial direction of the intermediate roll 5a on the upper side. The intermediate roll chock 6b rotatably supports one end in the axial direction of the intermediate roll 5b on the lower side. The backup roll chock 8a rotatably supports one end in the axial direction of the backup roll 7a on the upper side. The backup roll chock 8b rotatably supports one end in the axial direction of the backup roll 7b on the lower side.

In the width direction orthogonal to the axial direction of the work rolls 3a and 3b, work roll chock liners 9a and 9b are respectively provided on housing counter surfaces of the work roll chocks 4a and 4b. In the housing 2, housing blocks 10a and 10b are provided at portions facing the work roll chocks 4a and 4b in the width direction. In the width direction of the housing blocks 10a and 10b, housing liners 11a and 11b are respectively provided on surfaces facing the work roll chocks 4a and 4b. Note that the surfaces facing the work roll chocks 4a and 4b are housing surfaces corresponding to the housing counter surfaces of the work roll chocks 4a and 4b. The work roll chock liners 9a and 9b and the housing liners 11a and 11b are disposed with facing surfaces thereof in contact with each other. Lubricating oil such as grease is filled between the work roll chock liner 9a and the housing liner 11a and between the work roll chock liner 9b and the housing liner 11b.

Note that, although not illustrated in FIG. 1, work roll chocks, work roll chock liners, housing blocks, and housing liners are also respectively disposed at the other ends in the axial direction of the work rolls 3a and 3b. Although not illustrated in FIG. 1, intermediate roll chocks are also respectively disposed at the other ends in the axial direction of the intermediate rolls 5a and 5b. Although not illustrated in FIG. 1, backup roll chocks are also respectively disposed at the other ends in the axial direction of the backup rolls 7a and 7b.

In the following explanation, the work rolls 3a and 3b are also respectively simply described as work rolls 3 unless being particularly distinguished. In the following explanation, the work roll chocks 4a and 4b are also respectively simply described as work roll chocks 4 unless being particularly distinguished. In the following explanation, the intermediate rolls 5a and 5b are also respectively simply described as intermediate rolls 5 unless being particularly distinguished. In the following explanation, the intermediate roll chocks 6a and 6b are also respectively simply described as intermediate roll chocks 6 unless being particularly distinguished. In the following explanation, the backup rolls 7a and 7b are also respectively simply described as backup rolls 7 unless being particularly distinguished. In the following explanation, the backup roll chocks 8a and 8b are also respectively simply described as backup roll chocks 8 unless being particularly distinguished. In the following explanation, the work roll chock liners 9a and 9b are also respectively simply described as work roll chock liners 9 unless being particularly distinguished. In the following explanation, the housing blocks 10a and 10b are also respectively simply described as a housing blocks 10 unless being particularly distinguished. In the following explanation, the housing liners 11a and 11b are also respectively simply described as housing liners 11 unless being particularly distinguished.

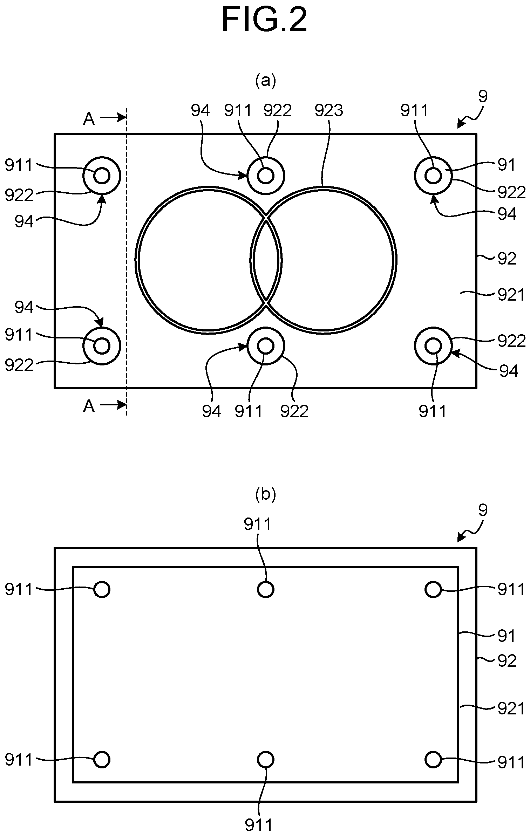

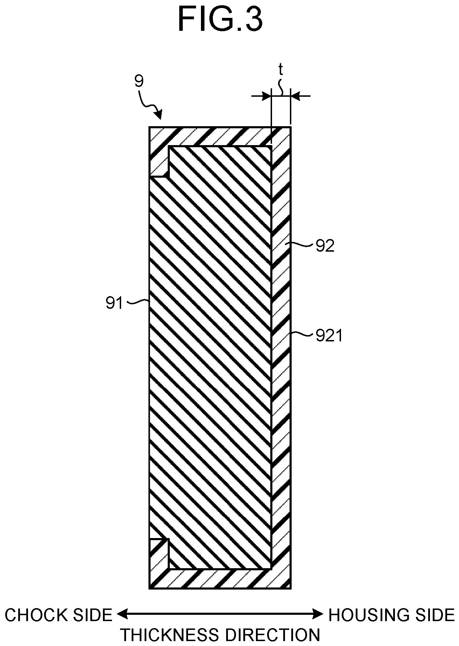

FIG. 2(a) is a schematic diagram of the work roll chock liner 9 viewed from the front side. FIG. 2(b) is a schematic diagram of the work roll chock liner 9 viewed from the rear side. FIG. 3 is a diagram illustrating an A-A cross section in FIG. 2(a) of the work roll chock liner 9. Note that, in the present embodiment, the front side of the work roll chock liner 9 is a side that comes into contact with the housing liner 11 in the thickness direction of the work roll chock liner 9 when the work roll chock liner 9 is attached to the rolling mill 1. The rear side of the work roll chock liner 9 is a side that comes into contact with the work roll chock 4 in the thickness direction of the work roll chock liner 9 when the work roll chock liner 9 is attached to the rolling mill 1.

The work roll chock liner 9 according to the embodiment is configured by a liner main body section 91 made of a metal material such as brass and a viscoelastic body 92 that is a damping material serving as vibration reducing means having a vibration reducing function. Note that the material of the liner main body section 91 is not limited to the metal material and only has to have strength enough to withstand fixing by bolts and may be, for example, a resin material or a ceramic material having rigidity higher than the rigidity of the viscoelastic body 92.

The liner main body section 91 is a plate-like member elongated in the axial direction of the work roll 3, has an edge portion on the rear side cut down by one step over the entire circumference, and is formed in a shape convex to the work roll chock 4 side in the thickness direction.

The viscoelastic body 92 is a plate-like member larger than the liner main body section 91 and has an internal space along the outer contour shape (the convex shape) of the liner main body section 91 to be capable of enclosing the liner main body section 91. At the same time, a part on the rear side of the viscoelastic body 92 is opened such that a surface other than the edge portion on the rear side of the liner main body section 91 is exposed. Then, the viscoelastic body 92 is stuck and fixed to the liner main body section 91 by an adhesive in a state in which the viscoelastic body 92 covers the liner main body section 91 such that the edge portion on the rear side of the viscoelastic body 92 is caught by the edge portion lowered by one step on the rear side of the liner main body section 91. As explained above, the edge portion on the rear side of the viscoelastic body 92 is hooked on the edge portion lowered by one step on the rear side of the liner main body section 91 and the viscoelastic body 92 encloses the liner main body section 91. Accordingly, fixing strength can be increased than when the plate-shaped viscoelastic body 92 is stuck and fixed by the adhesive only on the front side surface of the liner main body section 91. Note that, as a method of fixing the viscoelastic body 92 to the liner main body section 91, for example, the viscoelastic body 92 may be fastened and fixed to the liner main body section 91 by a fastening member such as a bolt. As the method of fixing the viscoelastic body 92 to the liner main body section 91, for example, the viscoelastic body 92 may be fixed to the liner main body section 91 by the adhesive and the fastening member.

As the viscoelastic body 92, for example, damping rubber excellent in heat resistance and water resistance only has to be used. In order to obtain the effect of reducing vibration, for example, the viscoelastic body 92 suitably has a characteristic of a loss coefficient of 0.2 or more in a frequency band desired to be reduced (100 to 1000 Hz) at a use environment temperature (40 [°C] to 80 [°C], preferably 50 [°C] to 60 [°C] in the case of cold rolling). As illustrated in FIG. 3, as thickness t of the viscoelastic body 92 on the housing side at least in the thickness direction, for example, a maximum thickness of the viscoelastic body 92 capable of attaching the work roll chock liner 9 to the rolling mill 1 only has to be set as the upper limit value. In order to obtain a more sufficient damping effect, the thickness t of the viscoelastic body 92 is preferably set to 1 [mm] or more and 15 [mm] or less.

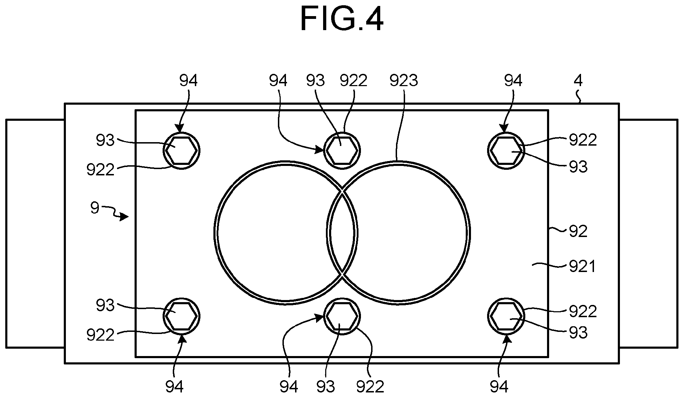

In the liner main body section 91, a plurality of through-holes 911 penetrating in the thickness direction are provided. In the viscoelastic body 92, a plurality of through-holes 922 have a larger diameter than the through-holes 911 of the liner main body section 91 and penetrating in the thickness direction to communicate with the through-holes 911 are provided. Accordingly, in the work roll chock liner 9, a plurality of bolt holes 94 that cause the through-holes 911 of the liner main body section 91 and the through-holes 922 of the viscoelastic body 92 and penetrate the work roll chock liner 9 in the thickness direction are provided. As illustrated in FIG. 4, the work roll chock liner 9 is fixed to a side surface of the work roll chock 4 on a side facing the housing liner 11 by a plurality of bolts 93 respectively inserted through the plurality of bolt holes 94. In the rolling mill 1 according to the embodiment, the work roll chock liner 9 and the housing liner 11 are brought into contact. Accordingly, in the rolling mill 1 according to the embodiment, vibration that causes chattering that has occurred in the rolling mill 1 can be reduced by the damping function of the viscoelastic body 92 of the work roll chock liner 9. In the rolling mill 1 according to the embodiment, the work roll chock liner 9 is configured by the liner main body section 91 made of the metal material and the viscoelastic body 92. Accordingly, the rigidity of the work roll chock liner 9 can be increased than when the work roll chock liner 9 is made of only a damping material such as a viscoelastic body. Extension of the life of the work roll chock liner 9 exposed to vibration for a long period of time can be achieved.

On the front side of the work roll chock liner 9, a groove 923 having a shape of two circles crossing side by side is provided on the front surface 921 of the viscoelastic body 92. The groove 923 is provided such that grease to be filled between the work roll chock liner 9 and the housing liner 11 easily stays but is not particularly limited to this shape. In the rolling mill 1 according to the embodiment, the vibration that causes chattering can also be reduced by a damping function by the grease filled between the work roll chock liner 9 and the housing liner 11. Note that, by providing the groove 923 in the viscoelastic body 92 as in the work roll chock liner 9 according to the embodiment, the depth of the groove 923 can be reduced than when the same groove for grease as the groove 923 is provided in a work roll chock liner made of only a metal material.

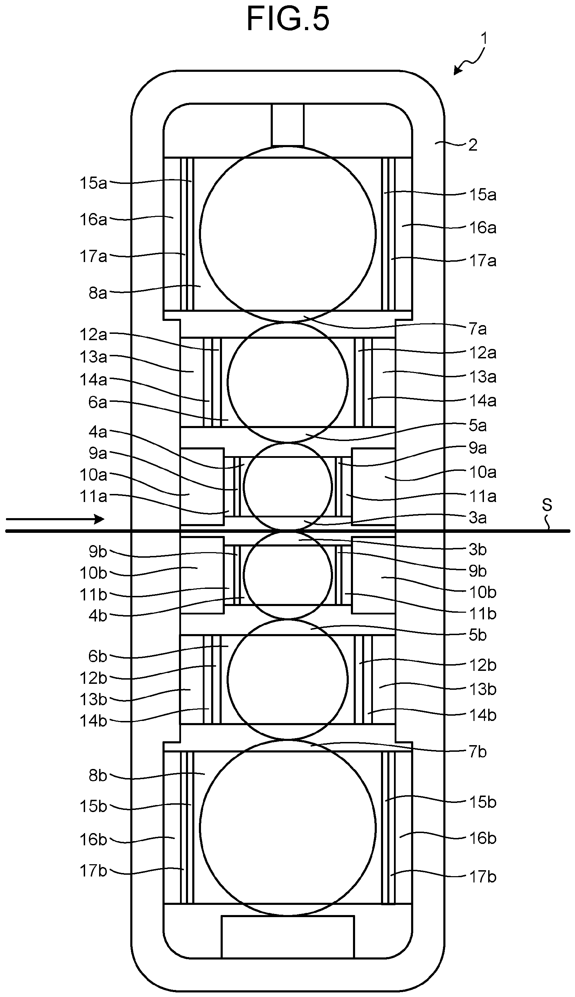

FIG. 5 is a diagram illustrating another configuration example of the rolling mill 1 according to the embodiment. In the rolling mill 1 illustrated in FIG. 5, intermediate roll chock liners 12a and 12b are respectively provided on the housing counter surfaces of the intermediate roll chocks 6a and 6b in the width direction orthogonal to the axial direction of the intermediate rolls 5a and 5b. In the housing 2, housing blocks 13a and 13b are provided at portions facing the intermediate roll chocks 6a and 6b in the width direction of the intermediate rolls 5a and 5b. In the width direction of the housing blocks 13a and 13b, housing liners 14a and 14b are respectively provided on surfaces facing the intermediate roll chocks 6a and 6b (housing surfaces corresponding to the housing counter surfaces of the intermediate roll chocks 6a and 6b). The intermediate roll chock liners 12a and 12b and the housing liners 14a and 14b are disposed with facing surfaces thereof set in contact with each other. Lubricating oil such as grease is filled between the intermediate roll chock liner 12a and the housing liner 14a and between the intermediate roll chock liner 12b and the housing liner 14b.

In the rolling mill 1 illustrated in FIG. 5, in the width direction orthogonal to the axial direction of the backup rolls 7a and 7b, backup roll chock liners 15a and 15b are respectively provided on the housing counter surfaces of the backup roll chocks 8a and 8b. In the housing 2, housing blocks 16a and 16b are provided at portions facing the backup roll chocks 8a and 8b in the width direction of the backup rolls 7a and 7b. In the width direction of the housing blocks 16a and 16b, housing liners 17a and 17b are respectively provided on surfaces facing the backup roll chocks 8a and 8b (housing surfaces corresponding to the housing counter surfaces of backup roll chocks 8a, 8b). The backup roll chock liners 15a and 15b and the housing liners 17a and 17b are disposed with facing surfaces thereof set in contact with each other. Lubricating oil such as grease is filled between the backup roll chock liner 15a and the housing liner 17a and between the backup roll chock liner 15b and the housing liner 17b.

In the following explanation, the intermediate roll chock liners 12a and 12b are also respectively simply described as intermediate roll chock liners 12 unless being particularly distinguished. In the following explanation, the backup roll chock liners 15a and 15b are also respectively simply described as the backup roll chock liners 15 unless being particularly distinguished. In the following explanation, the housing blocks 13a, 13b, 16a, and 16b are also respectively simply described as housing blocks 13 and 16 unless being particularly distinguished. In the following explanation, the housing liners 14a, 14b, 17a, and 17b are also respectively simply described as housing liners 14 and 17 unless being particularly distinguished.

Although not illustrated in FIG. 5, intermediate roll chock liners, backup roll chock liners, housing blocks, and housing liners are respectively disposed at the other ends in the axial direction of the intermediate rolls 5a and 5b and the other ends in the axial direction of the backup rolls 7a and 7b. The other components of the rolling mill 1 illustrated in FIG. 5 are the same as the components of the rolling mill 1 illustrated in FIG. 1.

In the rolling mill 1 illustrated in FIG. 5, chock liners or housing liners provided with the vibration reducing means (the viscoelastic body) having the vibration reducing function explained above with reference to FIG. 2 to FIG. 4 are applied to one or more of the work roll chock liners 9, the intermediate roll chock liners 12, the backup roll chock liners 15, and the housing liners 11,14, and 17. Accordingly, in the rolling mill 1 illustrated in FIG. 5, vibration that causes chattering can be reduced.

On the other hand, the magnitude of vibration that causes chattering is the largest at a part near a drive roll in the rolling mill 1. For that reason, in the rolling mill 1 illustrated in FIG. 5, it is desirable to apply the chock liners provided with the vibration reducing means (the viscoelastic body) of the present invention to the work roll chock liners 9 rather than the backup roll chock liners 15. In the rolling mill 1 illustrated in FIG. 5, it is desirable to apply the housing liners provided with the vibration reducing means (the viscoelastic body) of the present invention to the housing liners 11 rather than the housing liners 17. Further, it is desirable to additionally apply the chock liners or the housing liners provided with the vibration reducing means (the viscoelastic body) of the present invention to the liners at the other parts. The liners at the other parts are, for example, at least one of the intermediate roll chock liners 12, the backup roll chock liners 15, and the housing liners 14 and 17.

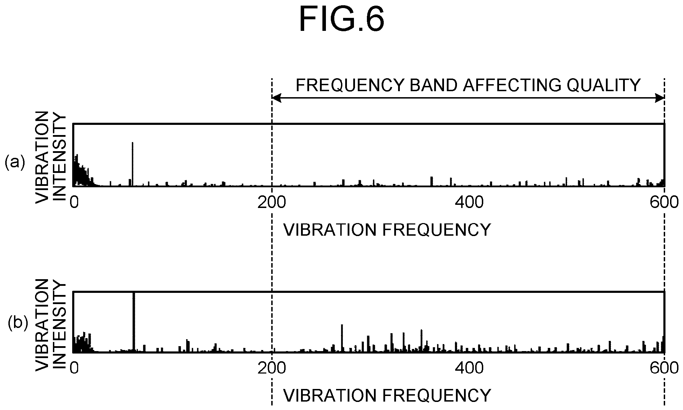

FIG. 6(a) is a graph illustrating a result of an FFT analysis of vibration at the time when rolling is performed by the rolling mill 1 according to the embodiment. FIG. 6(b) is a graph illustrating a result of the FFT analysis of vibration at the time when rolling is performed by a rolling mill according to a comparative example. Note that the rolling mill 1 according to the embodiment includes the work roll chock liner 9 configured by the liner main body section 91 made of metal and the viscoelastic body 92. In the rolling mill 1 according to the embodiment, the thickness t of the viscoelastic body 92 is 3 [mm]. On the other hand, the rolling mill according to the comparative example includes a work roll chock liner made of metal. The rolling mill 1 according to the embodiment and the rolling mill according to the comparative example have the same configuration except that the work roll chock liners included therein are different.

When comparing the rolling mill 1 according to the embodiment with the rolling mill according to the comparative example, the vibration intensity in the frequency band that affects the quality was reduced by about 80 [%] in the rolling mill 1 according to the embodiment with respect to the rolling mill according to the comparative example, and a good result of vibration reduction was obtained.

As explained above, in the rolling mill 1 according to the embodiment, the following effects can be obtained only by applying the present invention to the liners such as the work roll chock liners 9, which are components periodically replaced at replacement timing of the work rolls 3 or the like suitable for rolling conditions. That is, the rolling mill 1 according to the embodiment can reduce, with inexpensive means without involving large-scale remodeling of the rolling mill 1, vibration that causes chattering that occurs at the time of rolling and can suppress occurrence of a production loss without necessity of stopping a production line more than necessary. In the rolling mill 1 according to the embodiment, rolling speed increases as the steel sheet S, which is the material to be rolled, is thinner. Even at the same rolling speed, as the steel sheet S is harder, the steel sheet S is more easily affected by vibration that causes chattering. For that reason, in the rolling mill 1 according to the embodiment, when a thin steel sheet or a hard steel sheet is rolled as the steel sheet S, the effects explained above can be further achieved by applying the present invention.

### Industrial Applicability

The present invention can, while suppressing production loss, provide a rolling mill that can inexpensively reduce vibration that causes chattering.

### Reference Signs List

1 ROLLING MILL
2 HOUSING
3, 3a, 3b WORK ROLL
4, 4a, 4b WORK ROLL CHOCK
5, 5a, 5b INTERMEDIATE ROLL
6, 6a, 6b INTERMEDIATE ROLL CHOCK
7, 7a, 7b BACKUP ROLL
8, 8a, 8b BACKUP ROLL CHOCK
9, 9a, 9b WORK ROLL CHOCK LINER
10, 10a, 10b HOUSING BLOCK
11, 11a, 11b HOUSING LINER
12, 12a, 12b INTERMEDIATE ROLL CHOCK LINER
13, 13a, 13b HOUSING BLOCK
14, 14a, 14b HOUSING LINER
15, 15a, 15b BACKUP ROLL CHOCK LINER
16, 16a, 16b HOUSING BLOCK
17, 17a, 17b HOUSING LINER
91 LINER MAIN BODY SECTION
92 VISCOELASTIC BODY
93 BOLT
94 BOLT HOLE
911 THROUGH-HOLE
922 THROUGH-HOLE
923 GROOVE

## Claims

1. A rolling mill comprising:
a pair of upper and lower rolls disposed in a housing; and
a roll chock that holds each of the upper and lower rolls, wherein
a liner having a vibration reducing function is provided on at least one of a housing counter surface of the roll chock and a housing surface corresponding to the housing counter surface.

2. The rolling mill according to claim 1, wherein the liner is configured using a damping material.

3. The rolling mill according to claim 2, wherein
the damping material is a viscoelastic body, and
the liner is configured by a liner main body section made of a metal material and the viscoelastic body that covers the liner main body section.

4. The rolling mill according to any one of claims 1 to 3, wherein the upper and lower rolls are at least one of a pair of work rolls vertically disposed with a material to be rolled interposed therebetween, a pair of intermediate rolls respectively in contact with the pair of work rolls, and a pair of backup rolls respectively in contact with the pair of intermediate rolls.
